# EUROPEAN PATENT SPECIFICATION

(11) **EP 2 284 003 B1**
(45) Date of publication and mention of the grant of the patent: **12.02.2014**
(21) Application number: 09447036.6
(22) Date of filing: 06.08.2009
(51) Int. Cl.: B32B 3/24, B32B 27/06, B32B 27/32, B32B 27/36, B32B 27/40, E04D 11/02

(54) **Composition of a radiation reflecting breather membrane**
Zusammensetzungen einer strahlungsreflektierenden Luftsperre
Composition de membrane réfléchissant les radiations

(43) Date of publication of application: 16.02.2011
(73) Proprietor: Mondi Belcoat, Naamloze Vennootschap, 2570 Duffel (BE)
(72) Inventor: van Edom, Bart René Jos, 3271 Scherpenheuvel-Zichem (BE); Boeykens, Ivan, 2170 Merksem (BE); Vanhoof, Mieke, 2600 Merchem (BE)
(74) Representative: Donné, Eddy

(56) References cited:
- EP-A2- 1 316 600
- WO-A1-2005/003486
- GB-A- 2 136 844

## Description

The present invention relates to a composition of a radiation reflecting breather membrane.

Breather membranes find applications amongst others as water vapor control membranes traditionally used at the outside of pitch roof constructions. The outside is the side oriented towards the radiation source, in this case daylight, and the inside is the side oriented towards the inside of the house. Such layers must allow water vapor to escape thereby protecting the roof space against damage caused by humidity, condensation and mould.

The water vapor control layer adapts itself to changing weather conditions and humidity rates. In winter it protects against water infiltration, in summer it allows moisture vapor to escape and allows the wooden frames to dry.

These traditional water vapor control layers however are degradable by UV radiation, are not fire resistant and are not very resistant to mechanical damage (nail and tear).

WO 2005/003486 describes a multilayer covering for wall, ceiling or roof comprising essentially a flexible fabric with holes punched therethrough and attached to a metallic reflective foil, possibly attached to one or more paper layers. In this multilayer covering, the holes in the flexible fabric are not for breathing air, but only to be filled with a wall finishing such as acrylic paint or polymer binder with cement and sand. The material is not intended for breathing so the metal layer is not perforated.

GB 2.136.844 describes a composite building panel comprising a rigid box, made from a variety of materials including resin bonded rock fibre, fibre glass, polystyrene, polyurethane, plywood, particle board or metal, and a breather membrane made from spun-bonded polyolefin sheet through an adhesive layer. The breather membrane allows water vapor to pass through the panel from the inside of the building whilst preventing damp from penetrating from the outside of the building to the inside. The panels are giving rigidity to the breather membrane, but are also limiting the ease of processing of the breather membrane.

A fire retarding solution is described in EP 1.316.600 as a flexible laminate for protecting roof terrace structures, comprising a layer of non-combustible material, possibly a perforated metal layer, attached to a water impermeable, water vapour permeable membrane film, possibly made from monolithic TPU or PEBAX having a weight of about 25 g/m². A fire retardant substance may be incorporated in one of the layers or arranged between the layers of the laminate.
The purpose of the invention is to overcome these above mentioned and other disadvantages.

To this end, the invention comprises the following composition for a radiation reflecting breather membrane, characterized in that it consists of it consists of two composed layer packages, respectively an outer layer package and an inner layer package, which are fused, whereby the outer layer package comprises a monolithic polyethylene (PE) layer and a metallic or metalized radiation reflecting layer on the outside and a substrate layer on the inside, whereby this outer layer package is perforated, and whereby the inner layer package comprises a monolithic layer with a thickness (A) of less than 100 micrometer of extruded thermoplastic polyurethane (TPU) or thermoplastic polyester-ether (TPEE) fused to the substrate layer of the aforementioned perforated outer layer package.

Optionally the inner layer package can also be fused to a non woven polymer layer on the outside.

This inner layer package is not perforated and nonetheless offers a water vapor transmission rate of at least 600 g water vapor/m²/day.

The radiation reflecting breather membranes according to the invention are used on the outside of pitch roof and wall constructions and offer the advantage of being UV stable, water tight, fire resistant and mechanically strong against wear and tear.

They also offer the advantage of cutting energy loss through their radiation reflecting surface. In winter they retain heat within buildings. In summer, they reflect radiation preventing overheating.

The radiation reflecting membranes offer the advantage of being water tight, while they can be based on an extrusion coating technology according to another invention of the applicant which allows extrusion of very thin monolithic polymers with a thickness of less than 100 micrometers. In this way, thermoplastic polyurethane (TPU) or thermoplastic polyester-ether (TPEE) can be extruded in thicknesses between 8 to 100 micrometer. An extruded layer of 30 micrometer thick of TPU for instance has a water vapor transmission rate of at least 850 g/m²/day, and yet is monolithic and non perforated. With the same technology, thermoplastic polyester-ether (TPEE) can also be obtained with similar properties of water vapor transmission and water tightness.

Another advantage is that the membrane is resistant to degradation by UV radiation.

Another advantage is that the membrane remains smooth and silent when agitated by atmospheric conditions.

Another advantage is the combination of high resistance to mechanical damage of the composed membrane with a high transmission rate for water vapor, and of resistance to UV radiation, which is unequalled in existing breather membrane compositions.

Another advantage is given by the economical production technique which allows the use of affordable minimal quantities of TPU or TPEE to obtain a breathable yet monolithic membrane.

Another advantage of the membrane is that it can be used as a waterproof material or a water-vapor-permeable material for a wrapping material, fabric, a packing material, or a material for building protection.

With the intention of better showing the characteristics of the invention, hereafter, as an example without any limitative character, a preferred form of embodiment is described of a radiation reflecting breather membrane, with reference to the accompanying drawings, wherein:

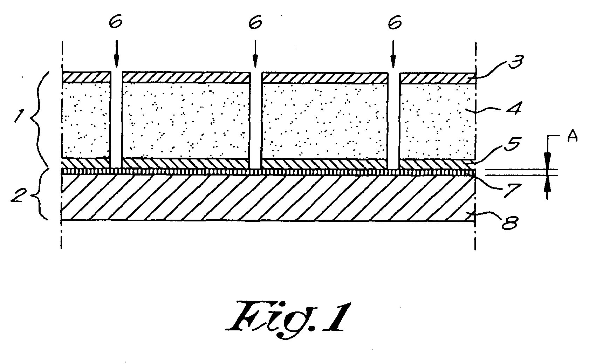

figure 1 schematically represents a cross section of a radiation reflecting membrane according to the invention.

The composition of the radiation reflecting membrane represented in figure 1 consists of :
An outer layer package 1 and an inner layer package 2 that are fused together whereby the outer layer package 1 is composed of a metalized or metallic radiation reflecting layer 3 on the outside of a monolithic polyethylene (PE) layer 4 lined by a substrate layer 5 (preferably 30-70 g/m²) at the inside. This outer layer package 1 is perforated by mechanical or other means, to allow water vapor to cross the three composing layers 3,4,5 through the perforations 6.
The inner layer package 2 consists of a very thin extruded layer 7 of TPU or TPEE, optionally lined on the outside by a non woven polymer layer 8 (preferably 70 - 150 g/m² ).
The inner layer package 2 is not perforated but offers a good water vapor transmission rate due to the very low thickness A of 8 to 100 micrometer of the monolithic TPU or TPEE polymer layer 7. The inner layer package 2 is fused to the substrate layer 5 of the outer layer package 1 by for instance a lamination process or by any other fusion means such as the use of glues.

The substrate layer 5 can be a porous or non porous material, woven or nonwoven polymers, film, metalized film, aluminum, paper, scrim, glass fiber tissue, or textile. If the substrate is a nonwoven polymer, its weight is preferably 30-70 g/m².

The present invention is in no way limited to the membrane composition described by way of an example and represented in the figures, however, such a membrane composition according to the invention can be realized in various forms without leaving the scope of the invention.

## Claims

1. Composition of a radiation reflecting breather membrane, **characterized in that** it consists of two composed layer packages, respectively an outer layer package (1) and an inner layer package (2), which are fused, whereby the outer layer package (1) comprises a monolithic polyethylene (PE) layer (4) and a metallic or metalized radiation reflecting layer (3) on the outside and a substrate layer (5) on the inside, whereby this outer layer package (1) is perforated (6), and whereby the inner layer package (2) comprises a monolithic layer (7) with a thickness (A) of less than 100 micrometer of extruded thermoplastic polyurethane (TPU) or thermoplastic polyester-ether (TPEE) fused to the substrate layer (5) of the aforementioned perforated outer layer package (1).

2. Composition of a radiation reflecting breather membrane according to claim 1, **characterized in that** the inner layer package (2) is also fused to a non woven polymer layer(8)on the outside.

3. Composition of a radiation reflecting breather membrane according to claim 1, **characterized in that** the inner layer package (2) is not perforated but offers a water vapor transmission rate of at least 600 g water vapor/m²/day.

4. Composition of a radiation reflecting breather membrane according to claim 1, **characterized in that** the radiation reflecting layer consists of an aluminum layer deposited on a carrier polymer layer or consists of a metal film.

5. Composition of a radiation reflecting breather membrane according to any of the preceding claims, **characterized in that** the substrate layer (5) can be porous or non porous material, woven or nonwoven polymers, film, metalized film, aluminum, paper, scrim, glass fiber tissue, or textile.

6. Composition of a radiation reflecting breather membrane according to any of the preceding claims, **characterized in that** substrate layers of non woven polymer layers (5,8) consist of polypropylene or polyester layers.

## Patentansprüche

1. Zusammensetzung einer strahlungsreflektierenden diffusionsoffenen Membran, **dadurch gekennzeichnet, dass** sie aus zwei zusammengesetzten Lagenpaketen besteht, nämlich einem äußeren Lagenpaket (1) und einem inneren Lagenpaket (2), die miteinander verschmolzen sind, wobei das äußere Lagenpaket (1) eine monolithische Polyethylen(PE)-Lage (4) und eine metallische oder metallisierte strahlungsreflektierende Lage (3) an der Außenseite und eine Substratlage (5) an der Innenseite umfasst, wobei dieses äußere Lagenpaket (1) perforiert (6) ist, und wobei das innere Lagenpaket (2) eine monolithische Lage (7) mit einer Dicke (A) von weniger als 100 Mikrometer aus extrudiertem thermoplastischem Polyurethan (TPU) oder thermoplastischem Polyesterether (TPEE), die an die Substratlage (5) des vorgenannten perforierten äußeren Lagenpakets (1) angeschmolzen ist, umfasst.

2. Zusammensetzung einer strahlungsreflektierenden diffusionsoffenen Membran nach Anspruch 1, **dadurch gekennzeichnet, dass** das innere Lagenpaket (2) an der Außenseite auch an eine vliesförmige Polymerlage (8) angeschmolzen ist.

3. Zusammensetzung einer strahlungsreflektierenden diffusionsoffenen Membran nach Anspruch 1, **dadurch gekennzeichnet, dass** das innere Lagenpaket (2) nicht perforiert ist, jedoch eine Wasserdampfdurchlässigkeitsrate von mindestens 600 g Wasserdampf/m²/Tag bietet.

4. Zusammensetzung einer strahlungsreflektierenden diffusionsoffenen Membran nach Anspruch 1, **dadurch gekennzeichnet, dass** die strahlungsreflektierende Lage aus einer Aluminiumschicht besteht, die auf einer Polymer-Trägerlage abgelagert ist, oder aus einer Metallfolie besteht.

5. Zusammensetzung einer strahlungsreflektierenden diffusionsoffenen Membran nach einem der vorgenannten Ansprüche, **dadurch gekennzeichnet, dass** die Substratlage (5) poröses oder nichtporöses Material, gewebte oder vliesförmige Polymere, Folie, metallisierte Folie, Aluminium, Papier, Gittergelege, Glasfasergewebe oder Textil sein kann.

6. Zusammensetzung einer strahlungsreflektierenden diffusionsoffenen Membran nach einem der vorgenannten Ansprüche, **dadurch gekennzeichnet, dass** Substratlagen aus vliesförmigen Polymerlagen (5, 8) aus Polypropylen- oder Polyesterlagen bestehen.

## Revendications

1. Composition d'une membrane d'aération réfléchissant les rayonnements, **caractérisée en ce qu'**elle est constituée par deux paquets de couches composites, respectivement un paquet de couches externe (1) et un paquet de couches interne (2) qui sont fusionnés, le paquet de couches externe (1) comprenant une couche monolithique de polyéthylène (PE) (4) et une couche métallique ou métallisée (3) réfléchissant les rayonnements du côté externe et une couche faisant office de substrat (5) du côté interne, ce paquet de couches externe (1) étant perforé (6), et le paquet de couches interne (2) comprenant une couche monolithique (7), possédant une épaisseur inférieure à 100 µm, d'un polyuréthane thermoplastique extrudé (TPU) ou d'un polyester-éther thermoplastique (TPEE), fusionnée à la couche (5) du paquet de couches externe perforé susmentionné (1), faisant office de substrat.

2. Composition d'une membrane d'aération réfléchissant les rayonnements selon la revendication 1, **caractérisée en ce que** le paquet de couches interne (2) est également fusionné à une couche polymère de non-tissé (8) du côté externe.

3. Composition d'une membrane d'aération réfléchissant les rayonnements selon la revendication 1, **caractérisée en ce que** le paquet de couches interne (2) n'est pas perforé, mais procure un degré de perméabilité de vapeur d'eau d'au moins 600 g de vapeur d'eau/m²/jour.

4. Composition d'une membrane d'aération réfléchissant les rayonnements selon la revendication 1, **caractérisée en ce que** la couche réfléchissant les rayonnements est constituée d'une couche d'aluminium déposée sur une couche polymère faisant office de support ou bien est constituée d'un film métallique.

5. Composition d'une membrane d'aération réfléchissant les rayonnements selon l'une quelconque des revendications précédentes, **caractérisée en ce que** la couche faisant office de substrat (5) peut représenter une matière poreuse ou non poreuse, des polymères tissés ou non tissés, un film, un film métallisé, de l'aluminium, du papier, de la gaze, un tissu en fibres de verre ou du textile.

6. Composition d'une membrane d'aération réfléchissant les rayonnements selon l'une quelconque des revendications précédentes, **caractérisée en ce que** les couches faisant office de substrat (5, 8) constituées par des couches de polymères non tissés sont constituées par des couches de polypropylène ou de polyester.
